# EUROPEAN PATENT SPECIFICATION

(11) **EP 1 317 660 B1**
(45) Date of publication and mention of the grant of the patent: **13.08.2008**
(21) Application number: 01960797.7
(22) Date of filing: 15.08.2001
(51) Int. Cl.: G01F 23/64, G01F 23/284

(54) **CATALYST FEEDING SYSTEM**
KATALYSATOR-ZUFÜHRUNGSSYSTEM
SYSTEME D'ALIMENTATION DE CATALYSEUR

(30) Priority: 16.08.2000 FI 20001817
(43) Date of publication of application: 11.06.2003
(73) Proprietor: Borealis Technology Oy, 06101 Porvoo (FI)
(72) Inventor: KIVELÄ, Jouni, A-1220 Wien (AT); ELOVAINIO, Erno, FIN-00430 Helsinki (FI); SUPPOLA, Kauko, FIN-07590 Huuvari (FI)
(74) Representative: Heikkinen, Esko Juhani
(86) International application number: PCT/FI2001/000721
(87) International publication number: WO 2002/014805

(56) References cited:
- US-A- 2 998 309
- US-A- 5 614 831

## Description

### Field of the invention

The present invention relates to a system for feeding a catalyst mixture containing solid catalyst mixed in a carrier fluid. The invention can be used for example for feeding solid catalysts into a polymerization reactor.

### Background of the invention

In various polymerization processes, solid catalyst is fed into a reactor. In order to achieve a reliable feed, the catalyst can be suspended into a highly viscous carrier fluid medium such as oil or wax to form a thick wax-like suspension which, however, can still be dosed by pumping. Feed tanks containing such a catalyst suspension can be provided with a float inside. The float presses the catalyst suspension evenly downwards and ensures that the tank is emptied reliably and without any contamination risk with a possible previous catalyst batch of different type. In present systems, the consumption of the catalyst suspension is measured by continuously weighing the tank, and the feed is then adjusted on the basis of these measurements. This sets special requirements on the process equipment. For instance, the connections to the tanks must be made by flexible hoses. Such hoses may still bring inaccuracy to the measurement results.

There are also catalyst cylinder systems which are based on a mechanical construction where a separate shaft is slidably mounted through the top of the cylinder into the outside atmosphere. The position of the shaft (which corresponds to the position of the float) is detected by conventional means outside the cylinder This means a potential risk of leakage through the seals. The total space (heighth) needed is about double as compared to the main cylinder.

### General description of the invention

Now a catalyst feeding system in accordance with claim 1 has been invented. Some preferable embodiments of the invention are presented in the other claims.

The system in accordance with the invention comprises a cylindrical tank for the catalyst mixture and a float slidable in the tank. The tank can be provided with a jacket. For determining the position of the float, the tank is provided with a radar level gauge. Thus the amount of the catalyst mixture in the tank can be calculated continuously and reliably. The tank can be fixed. No flexible hoses are needed for connections. All kind of visible moving parts, such as sliding shafts, can be eliminated. The whole tank may be a completely tight cylinder where all moving parts (one float) are inside a pressure vessel (cylinder). The specific characters of the invention can be achieved by using a radar type level instrument specifically adapted to the catalyst feeder system. By using the radar type level instrument, the whole system is changed from a level measurement to an accurate flow measurement.

In accordance with the invention, it can be provided a compact system which needs less space than the conventional systems, gives more accurate measurement/calculation results and is simple and unexpensive. The system can be used reliably for feeding mixtures of high solid contents at low flow rates.

### Brief description of the drawings

The enclosed drawings form a part of the written detailed description and show examples of using the invention. In the drawings,

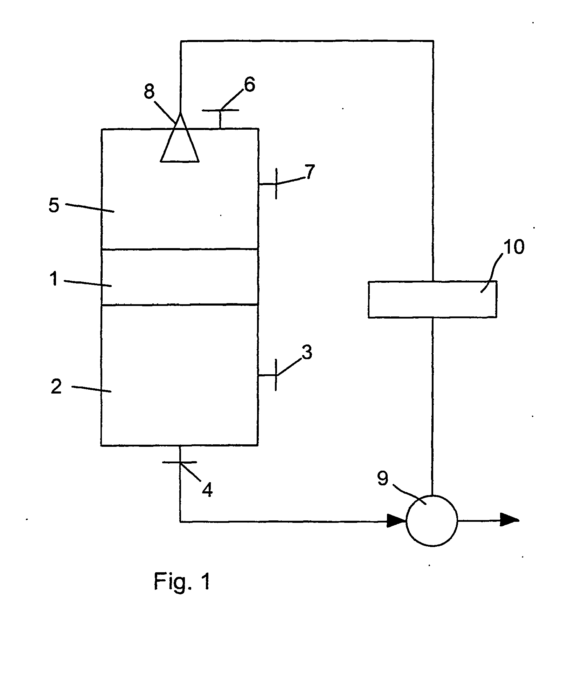

- Figure 1 shows a schematic representation of a catalyst tank in accordance with the invention.

### Detailed description of the invention

The catalyst mixture contains solid catalyst material mixed in a liquid carrier fluid medium. The carrier fluid is preferably oil, wax or like, whereby a wax-like mixture (catalyst wax) is formed. The medium used for the catalyst is preferably inert towards the catalyst material itself. The medium is preferably inert also towards other substances possibly present. Especially, when the mixture is fed into a reactor, the medium is preferably inert towards the reacting substances.

The carrier fluid preferably has such a high viscosity that the catalyst does not easily settle or sedimentate from the mixture. The viscosity at storage or pumping temperature (-20°C to 100°C) may be for example 4 to 20 Pas, typically 6 to 12 Pas, and especially 8 to 10 Pas.

The fluid may be for example oil or wax, such as a poly-α-olefin oil or paraffin wax. The medium may be also a mixture of oil or wax in oil with lower viscosity.

The catalyst mixture may contain suitable additives for example in order to increase physical stability of the mixture or to achieve desired rheological properties.

The concentration of the catalyst in the mixture may be for example at least 1 g/dm³, such as at least 10 g/dm³, preferably at least 100 g/dm³, and most preferably 300 to 500 g/dm³.

The volumetric flow rate of the mixture from the tank may be for example 0.01 to 100 dm³/h, typically 1 to 25 dm³/h, and most preferably 2 to 10 dm³/h.

Solid materials may form agglomerates in the mixture. Such agglomerates may be removed from the mixture. This can be done by providing a filter in the feeding lines, for instance in the outlet from the tank. When the filter is preferably located in front of a pump, possible agglomerates do not disturbancies in the operation of the pump. Neither would the structure of a polymerization catalyst break in the pump.

From the tank the catalyst mixture may be pumped for instance into a pressurized vessel. The pressurized vessel may be especially a process reactor, such as a gas phase reactor (like a fluidized bed reactor), a loop reactor, or an elongated plug flow reactor. The pressure in the vessel may be for example 1 to 100 bar, typically 40 to 60 bar.

The catalyst may be especially such as used in an olefin polymerization or a copolymerization reaction. The olefin is especially an α-olefin, such as propene or ethene. Other C₂-C₈ olefins, such as pentene or 1-butene, can be used as comonomers. The catalyst may be for example of the Ziegler-Natta or single site catalyst type. The catalyst and liquid medium may be e.g. such as described in FI Patent 95387 (corresponding to EP-A-607 703).

The tank contains a float which presses the catalyst wax evenly downwards towards the outlet. The float may be pneumatically or hydraulically driven. Especially an inert fluid is used. The fluid is preferably a gas or mixture of gases. Especially nitrogen can be used. The feeding pressure from the tank is preferably from 0.1 to 20 bar.

The tank is provided with a radar level gauge, which measures the height position of the float. It transmits a microwave to the float and receives the reflection from the surface of the float. On the basis of the measurement the amount of the catalyst mixture in the tank can be calculated continuously. The radar level gauge is preferably in the roof of the tank, whereby it transmits the microwave directly downwards to the upper surface of the float.

Radar level instruments that can be used in the present system are commercially available. Measurement principle is following: Radar signals (frequency e.g. 24 GHz) are emitted as short pulses from the antenna of radar sensor towards the target level to be measured. Radar impulses reflected from the target level are received as echoes by the antenna. The running period of the radar impulses from emission to receipt is proportional to the distance. The measurement is unaffected by the temperature, pressure and vapours. A final transmitted signal is calculated and generated in the instrument's electronics. It is an integrated part of the instrument's body.

Microwave radar systems have been used for example in large oil tanks for monitoring the surface level of oil in the tank, see e.g. US 5 614 831.

Figure 1 shows an example of a catalyst feeding system in accordance with the invention. The tank is round and provided with a sealed float 1. The diameter of the tank may be e.g. 50 to 500 mm. The upper and lower surfaces of the float are even. The float can be moved in the longitudinal direction of the tank. The lower chamber 2 of the tank is for the catalyst and is provided with an inlet 3 at the wall of the chamber and with an outlet 4 at the bottom. The upper chamber 5 of the tank is for pressurized inert gas, such as nitrogen. The upper chamber is provided with an inlet 6 at the roof of the chamber and with an outlet 7 at the side wall. Sealing of the float prevents gas from mixing with the catalystmixture. Such bubbles might cause problems e.g. in pumps.

The lower chamber 2 is completely filled with the catalyst wax. When the catalyst wax is pumped out from the lower chamber, the float 1 moves downwards so that no vacuum room is formed in the lower chamber. Thus the distance moved by the float is directionally proportional to the volume of the catalyst mixture pumped out from the tank.

The roof of the tank is provided with a radar level gauge 8. It transmits a microwave towards the float and receives a reflection from the upper surface of the float. Thus the distance moved by the float and thus also the volume of the catalyst mixture pumped out of the tank by means of the pump 9 can can be calculated and the efficiency of the pump controlled by the system 10. The system can be also used for calculating the amount of the mixture fed into the tank during the filling phase.

The pump 9 is preferably a valveless rotary piston pump.

Suitable radar gauges that can be used in the invention are commercially available. For instance, the following type of instrument can be used:
- Instrument type:: 2-wire radar level transmitter, Ex-certified, HART protocol
- Signal:: Standard 4...20 mA current signal
- Process connection:: Flange connection direct to a vessel, DN 80, PN 40
- Accuracy:: 0.1% (of full scale)
- Resolution:: 1 mm

The amount of the catalyst mixture can be accurately measured without e.g. weighing operations. Thus the inlets 3, 6 and outlets 4, 7 can be fixed and rigid. No flexible hose connections are needed. According to one embodiment, the connections 3 and 4 and connections 6 and 7 can be combined into circles.

The float 1 may be e.g. a pad type flange (e.g. 300# ANSI) provided with a cover steel plate (e.g. 5 mm).

## Claims

1. A catalyst feeding system for feeding a catalyst mixture containing solid catalyst mixed with a carrier fluid, the system comprising a cylindrical tank and a float (1) slidable in the tank, whereby the catalyst mixture is fed into and dosed out of the tank on one side of the float, **characterized in that** the tank is provided with a radar level gauge (8) for determining the position of the float (1) in the tank.

2. A system according to claim 1, wherein the radar level gauge (8) is on one side of the float (1) and the catalyst mixture on the other.

3. A system according to claim 1 or 2, wherein the tank is provided with an inlet (3) for feeding the catalyst mixture into the tank and with an outlet (4) for dosing the mixture out of the tank, and wherein the inlet or the outlet, preferably each of them, is rigid.

4. A system according to any of claims 1 to 3, wherein the part of the tank on the other side of the float (1) than the catalyst mixture is provided with a rigid inlet (6) for feeding pressurized fluid into the cylinder.

5. A system according to claim 4, wherein the part of the tank on the other side of the float (1) than the catalyst mixture is provided with a rigid outlet (7) for leading pressurized fluid out of the cylinder.

6. A system according to any of claims 1 to 5, wherein the system comprises a pump (9) for feeding the catalyst mixture out of the tank, and means (10) for controlling the pump on the basis of the measurement results of the radar level gauge (8).

7. A method for determining the amount of catalyst mixture dosed out of a cylindrical tank comprising a float (1) slidable in the tank and in which the catalyst mixture is fed into and dosed out of the tank on one side of the float, **characterized in that** the distance moved by the float (1) is measured with a radar level gauge (8) and the amount of the catalyst mixture dosed is calculated on the basis of this measurement.

## Patentansprüche

1. Katalysator-Zuführungssystem zum Zuführen eines Katalysatorgemischs, enthaltend festen Katalysator, gemischt mit einem Trägerfluid, wobei das System einen zylinderförmigen Tank und einen im Tank verschiebbaren Schwimmer (1) umfasst, wobei das Katalysatorgemisch an einer Seite des Schwimmers dem Tank zugeführt und aus dem Tank heraus dosiert wird, **dadurch gekennzeichnet, dass** der Tank mit einem Radarfiillstandmessgerät (8) zum Bestimmen der Position des Schwimmers (1) im Tank versehen ist.

2. System nach Anspruch 1, wobei sich das Radarfiillstandmessgerät (8) an einer Seite des Schwimmers (1) und das Katalysatorgemisch an der anderen Seite befindet.

3. System nach Anspruch 1 oder 2, wobei der Tank mit einem Einlass (3) zum Zuführen des Katalysatorgemischs in den Tank und mit einem Auslass (4) zum Dosieren des Gemischs aus dem Tank heraus versehen ist, und wobei der Einlass oder der Auslass, vorzugsweise beide davon, starr sind.

4. System nach einem der Ansprüche 1 bis 3, wobei der Teil des Tanks an der anderen Seite des Schwimmers (1) als das Katalysatorgemisch mit einem starren Einlass (6) zum Zuführen von unter Druck gesetztem Fluid in den Zylinder versehen ist.

5. System nach Anspruch 4, wobei der Teil des Tanks an der anderen Seite des Schwimmers (1) als das Katalysatorgemisch mit einem starren Auslass (7) zum Leiten von unter Druck gesetztem Fluid aus dem Zylinder heraus versehen ist.

6. System nach einem der Ansprüche 1 bis 5, wobei das System eine Pumpe (9) zum Zuführen des Katalysatorgemischs aus dem Tank heraus und Mittel (10) zum Regeln der Pumpe auf der Basis der Messergebnisse des Radarfüllstandmessgeräts (8) umfasst.

7. Verfahren zum Bestimmen der Menge an Katalysatorgemisch, die aus einem zylinderförmigen Tank heraus dosiert wird, der einen im Tank verschiebbaren Schwimmer (1) umfasst, und wobei das Katalysatorgemisch an einer Seite des Schwimmers dem Tank zugeführt und aus dem Tank heraus dosiert wird, **dadurch gekennzeichnet, dass** der Abstand, um welchen der Schwimmer (1) bewegt wird, mit einem Radarfüllstandmessgerät (8) gemessen und die Menge des dosierten Katalysatorgemischs auf der Basis dieser Messung berechnet wird.

## Revendications

1. Un système de fourniture de catalyseur pour fournir un mélange catalyseur contenant un catalyseur solide mélangé avec un fluide porteur, le système comprenant un réservoir cylindrique et un flotteur (1) pouvant coulisser dans le réservoir, où le mélange catalyseur est fourni en entrée du réservoir et dosé en sortie du réservoir d'un côté du flotteur, **caractérisé en ce que** le réservoir est pourvu d'une jauge radar de niveau (8) pour déterminer la position du flotteur (1) dans le réservoir.

2. Un système selon la revendication 1, dans lequel la jauge radar de niveau (8) est d'un côté du flotteur (1) et le mélange catalyseur de l'autre.

3. Un système selon la revendication 1 ou 2, dans lequel le réservoir est pourvu d'une entrée (3) pour fournir le mélange catalyseur en entrée du réservoir et d'une sortie (4) pour doser le mélange en sortie du réservoir, et dans lequel l'entrée ou la sortie, de préférence chacune d'entre elles, est rigide.

4. Un système selon l'une des revendications 1 à 3, dans lequel la partie du réservoir située du côté du flotteur (1) autre que celui du mélange catalyseur est pourvue d'une entrée rigide (6) pour fournir un fluide pressurisé en entrée du cylindre.

5. Un système selon la revendication 4, dans lequel la partie du réservoir située du côté du flotteur (1) autre que celui du mélange catalyseur est pourvue d'une sortie rigide (7) pour conduire le fluide pressurisé en sortie du cylindre.

6. Un système selon l'une des revendications 1 à 5, dans lequel le système comprend une pompe (9) pour extraire le mélange catalyseur hors du réservoir, et des moyens (10) pour contrôler la pompe sur la base des résultats de mesure de la jauge de niveau à radar (8).

7. Un procédé pour déterminer la quantité de mélange catalyseur dosé en sortie d'un réservoir cylindrique comprenant un flotteur (1) pouvant coulisser dans le réservoir et dans lequel le mélange catalyseur est fourni en entrée du réservoir et dosé en sortie du réservoir d'un côté du flotteur, **caractérisé en ce que** la distance parcourue par le flotteur (1) est mesurée avec une jauge radar de niveau (8) et la quantité du mélange catalyseur dosé est calculée sur la base de cette mesure.
